# EUROPÄISCHE PATENTANMELDUNG

(11) **EP 2 192 030 A1**
(43) Veröffentlichungstag der Anmeldung: **02.06.2010**
(21) Anmeldenummer: 09169004.0
(22) Anmeldetag: 31.08.2009
(51) Int. Cl.: B62D 55/065

(54) **Landwirtschaftliche Zugmaschine**

(30) Priorität: 28.11.2008 DE 102008059465
(71) Anmelder: CLAAS Selbstfahrende Erntemaschinen GmbH, 33428 Harsewinkel (DE)
(72) Erfinder: Obermeier-Hartmann, Robert, 33142, Büren (DE)

(57) **Zusammenfassung**

Eine landwirtschaftliche Zugmaschine hat ein vorderes und ein hinteres Raupenfahrwerk (3, 3', 3"; 4, 4"), von denen wenigstens eines (3, 3', 3"; 4) lenkbar ist und die eine unterschiedliche Länge auf weisen.

## Beschreibung

Die vorliegende Erfindung betrifft eine landwirtschaftliche Zugmaschine mit Raupenfahrwerken. Raupenfahrwerke haben gegenüber Einzelrädern den Vorteil, dass sie die Verteilung des Gewichts der Maschine auf eine größere Oberfläche ermöglichen, wodurch eine Verdichtung des befahrenen Bodens vermieden oder zumindest gering gehalten werden kann.

Aus DE 100 33 261 A1 ist eine landwirtschaftliche Maschine nach dem Oberbegriff des Anspruchs 1 bekannt. Diese Maschine hat identische vordere und hintere Raupenfahrwerke, deren Schiffe jeweils zwei von einem Raupenband umschlungene gleich große Räder aufweisen. Die beiden Raupenfahrwerke sind jeweils mit Lenkausschlägen in entgegengesetzte Richtungen lenkbar, um enge Kurven fahren zu können.

Die Längsausdehnung eines Raupenfahrwerks ist wesentlich größer als die eines einzelnen Rades, und dementsprechend groß ist auch die Seitwärtsauslenkung der vorderen und hinteren Enden eines Raupenfahrwerks beim Kurvenfahren. Der Platzbedarf der Karosserie schränkt daher bei einem Fahrzeug mit Raupenfahrwerk die Manövrierfähigkeit im Allgemeinen erheblich mehr ein als bei einem Fahrzeug mit Einzelrädern.

Beim Einschlagen eines lenkbaren Raupenfahrwerks ist ein erheblicher Reibungswiderstand zwischen den Raupenbändern und dem Untergrund zu überwinden, Der Radius einer gefahrenen Kurve hängt ab von dem Winkel, den die Fahrtrichtungen der beiden Raupenfahrwerke zueinander bilden. Bei dem herkömmlichen symmetrischen Aufbau haben beide Fahrwerke in Bezug auf die Karosserie des Fahrzeugs entgegengesetzt gleiche Einschlagwinkel, und die an den beiden Fahrwerken beim Einschlagen zu leistende Arbeit ist in der Summe genauso groß wie in dem Fall, dass bei einem Fahrzeug mit nur einem lenkbaren Fahrwerk dieses in Bezug zur Karosserie und dem lenkbaren Fahrwerk doppelt so weit wie jedes einzelne Fahrwerk des bekannten symmetrischen Aufbaus eingeschlagen wird.

Aufgabe der vorliegenden Erfindung ist, die Lenkbarkeit einer landwirtschaftlichen Zugmaschine mit Raupenfahrwerken zu verbessern. Die Aufgabe wird dadurch gelöst, dass bei einer landwirtschaftlichen Zugmaschine mit wenigstens einem vorderen und einem hinteren Raupenfahrwerk, von denen wenigstens eines lenkbar ist, die Länge der wenigstens zwei Raupenfahrwerke verschieden ist. Dies hat zur Folge, dass wenn die Zugmaschine in eine Kurve gelenkt wird, der Widerstand gegen eine Drehung beim kürzeren Raupenfahrwerk geringer ist als bei dem längeren.

Infolge dessen resultiert für das kürzere Fahrwerk ein größerer Einschlagwinkel, und die Arbeit, die geleistet werden muss, um einen gewünschten Winkel zwischen den Fahrtrichtungen der beiden Raupenfahrwerke herzustellen, und die der Summe über beide Fahrwerke des Produkts von Einschlagwinkel und widerstandsmoment entspricht, ist verringert.

Für eine gute Manövrierfähigkeit ist im Allgemeinen bevorzugt, dass das vordere Raupenfahrwerk das kürzere ist.

Das kürze Raupenfahrwerk kann zweckmäßigerweise an einem Drehschemel montiert sein.

Alternativ kann das kürzere Raupenfahrwerk auch zwei Raupenschiffe umfassen, die zum Lenken um voneinander beabstandete vertikale Achsen schwenkbar sind.

Vorteilhaft ist, wenn sowohl das vordere als auch das hintere Raupenfahrwerk lenkbar sind. So muss zum Fahren einer Kurve von gegebenem Radius das kürzere Raupenfahrwerk nicht ganz so weit eingeschlagen werden, wie wenn dieses allein lenkbar ist, was den Platzkonflikt zwischen Raupenfahrwerken und Karosserie zu entschärfen hilft.

Als eine weitere Alternative kann die Karosserie der Zugmaschine zwei um eine vertikale Achse gegeneinander schwenkbare Karosserieteile aufweisen, von denen ein vorderes von dem vorderen Raupenfahrwerk und ein hinteres von dem hinteren Raupenfahrwerk getragen ist.

Unterschiedliche Längen der beiden Laufwerke sind konstruktiv realisierbar, indem zum Beispiel das längere Raupenfahrwerk größere Umlenkrollen aufweist als das kürzere. Zusätzlich oder alternativ kann auch die Zahl von zwischen den Umlenkrollen angeordneten Stützrollen am längeren Fahrwerk größer als am kürzeren sein.

Unter dem Gesichtspunkt der seitlichen Auslenkung des Raupenfahrwerks beim Kurvenfahren ist eine Ausgestaltung bevorzugt, bei der das wenigstens eine lenkbare Raupenfahrwerk eine zentrale Antriebsrolle und der Antriebsrolle vor- und nachgelagerte Umlenkrollen umfasst.

Es kann zwar auch eine Umlenkrolle selbst angetrieben sein, doch ist dies insbesondere bei einem nicht lenkbaren Raupenlaufwerk des einfachen Aufbaus wegen bevorzugt.

Ein Raupenlaufwerk mit angetriebener Umlenkrolle kann mit dem Raupenfahrwerk mit zentraler Antriebsrolle und der Antriebsrolle vor- und nachgelagerten Umlenkrollen in einer Maschine kombiniert sein. Bei einem solchen Laufwerk sind die Umlenkrollen vorzugsweise größer als alle anderen Rollen, um die Antriebskraft sicher auf das Raupenband zu übertragen.

Insbesondere wenn vorderes und hinteres Laufwerk lenkbar sein sollen, ist es bevorzugt, wenn beide die zentrale Antriebsrolle und die vor- und nachgelagerten Umlenkrollen aufweisen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1 bis 4: jeweils schematische Seitenansichten von landwirtschaftlichen Zugmaschinen gemäß verschiedenen Ausgestaltungen der Erfindung.
- Fig. 5: eine Draufsicht auf die Zugmaschine der Fig. 1 mit eingeschlagenem vorderen Raupenfahrwerk;
- Fig. 6: eine Draufsicht auf die Zugmaschine der Fig. 2 mit eingeschlagenem vorderem Raupenfahrwerk;
- Fig. 7: eine Draufsicht auf die Zugmaschine der Fig. 3 mit eingeschlagenem vorderem Raupenfahrwerk;
- Fig. 8: eine Draufsicht auf eine Zugmaschine mit Knicklenkung;
- Fig. 9: eine Draufsicht auf eine Zugmaschine mit achsschenkelgelenkten vorderen und hinteren Fahrwerken bei Kurvenfahrt; und
- Fig. 10: eine Draufsicht auf die Maschine der Fig. 9 im Hundegang.

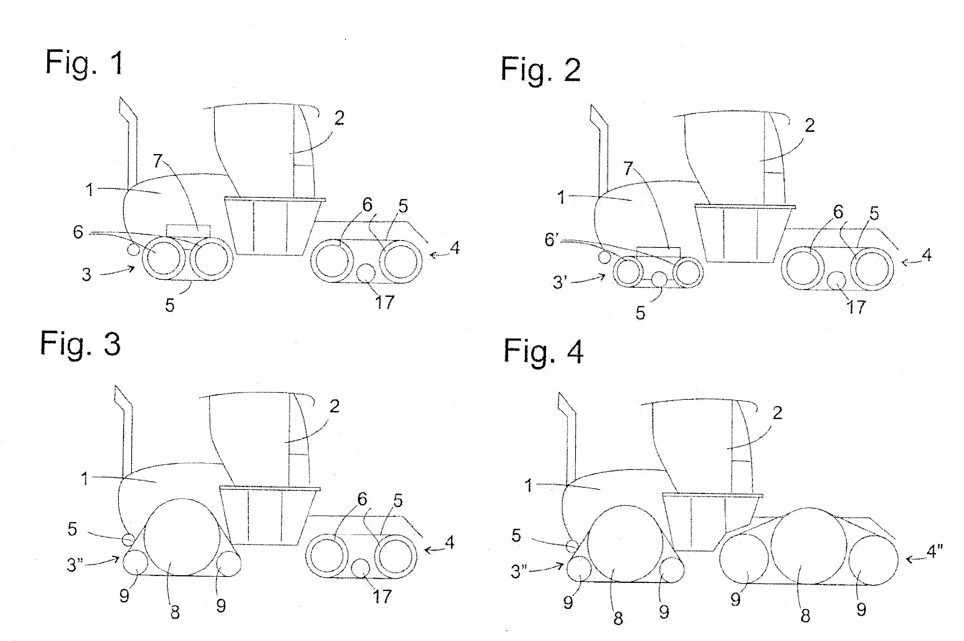

Fig. 1 zeigt eine stark schematisierte Seitenansicht einer landwirtschaftlichen Zugmaschine gemäß einer ersten Ausgestaltung der Erfindung. Eine Karosserie mit Motorgehäuse 1 und Fahrerkabine 2 ist von jeweils zweischiffigen vorderen und hinteren Raupenfahrwerken 3, 4 getragen. Jedes Schiff der beiden Fahrwerke 3, 4 umfasst in an sich bekannter Weise zwei von einem Raupenband 5 umschlungene Umlenkrollen 6. Die Umlenkrollen 6 haben sämtlich gleichen Durchmesser, vorzugsweise sind die Umlenkrollen 6 beider Fahrwerke 3, 4 baugleich.

Die Zwischenräume zwischen den Umlenkrollen 6 sind beim hinteren Raupenfahrwerk 4 größer und bieten mehr Platz für Stützrollen, die in Kontakt mit einem unteren Strang des Raupenbands 5 stehen, um das Gewicht der Zugmaschine gleichmäßig auf die Bodenkontaktfläche der Raupenbänder 5 zu verteilen. Fig. 1 zeigt eine Stützrolle 17 am Fahrwerk 4 und keine am Fahrwerk 3, doch können natürlich auch am vorderen Fahrwerk 3 Stützrollen vorhanden sein, solange ihre Zahl kleiner ist als am hinteren Fahrwerk 4.

Die Achsen der Rollen 6 des hinteren Fahrwerks 4 sind in Bezug auf die Karosserie ortsfest. Die Achsen des vorderen Raupenfahrwerks 3 sind in einem Drehschemel 7 ortsfest, der seinerseits um eine vertikale Achse in Bezug zur Karosserie drehbar ist. Die Achse der Drehung verläuft durch den Mittelpunkt eines von den vier Rollen 6 des Fahrwerks 3 definierten Rechtecks.

Die Ausgestaltung der Fig. 2 unterscheidet sich von derjenigen der Fig. 1 lediglich durch den Aufbau des vorderen Raupenfahrwerks. Hier umfasst jedes Schiff des mit 3' bezeichneten Raupenfahrwerks zwei Umlenkrollen 6' und eine Stützrolle 17', die jeweils kleiner als die entsprechenden Rollen 6, 17 des hinteren Fahrwerks 4 sind. So ergibt sich auch hier beim vorderen Fahrwerk 3'eine geringere Länge als beim hinteren Fahrwerk 4. Wie bei Fig. 1 liegt das vordere Fahrwerk 3' komplett unterhalb des Motorgehäuses 1', so dass ein Kontakt der Umlenkrollen 6' mit dem Motorgehäuse, der den Einschlagwinkel des Fahrwerks 3' einschränken würde, ausgeschlossen ist.

Fig. 3 zeigt eine Abhandlung, bei der das vordere Fahrwerk 3" jeweils eine großformatige mittige Antriebsrolle 8 und vor bzw. hinter dieser zwei kleine antriebslose Umlenkrollen 9 aufweist. Ein Vorteil dieser Ausgestaltung liegt darin, dass eine an den rechts und links vom Motorgehäuse 1 beabstandeten Antriebsrollen 8 angreifende Antriebswelle relativ hoch angeordnet werden und eventuell sogar durch das Motorgehäuse 1 hindurch verlaufen kann, wohingegen die kleinen Umlenkrollen 9 beim Einschlagen unter das Motorgehäuse 1 eingreifen können, so dass trotz vertikaler Überlappung der Antriebsrollen 8 mit dem Motorgehäuse 1 ein ähnlich großer Einschlagwinkel wie bei einem Fahrwerk mit Einzelrädern realisierbar ist.

Fig. 4 zeigt eine Abwandlung, bei der auch das hintere Raupenfahrwerk, hier mit 4" bezeichnet, eine zentrale Antriebsrolle 8 aufweist, die größer ist als davor und dahinter angeordnete Umlenkrollen 9.

Ein solches Fahrwerk ist auch als "Stocks-Raupe" bekannt. Im vorliegenden Fall sind die Antriebsrollen 8 beider Fahrwerke 3", 4" identisch, und die Umlenkrollen 9 sind am hinteren Laufwerk 4" größer, so dass dieses länger als das vordere ist. Alternativ könnten auch alle Rollen 8, 9 des hinteren Fahrwerks 4" gegenüber denen des vorderen maßstäblich vergrößert sein, oder es könnten jeweils gleich große Antriebs- und Umlenkrollen 8, 9 am hinteren Fahrwerk 4" mit größerem Abstand als am vorderen 3" angeordnet sein und der Zwischenraum zwischen Antriebs- und Umlenkrollen des hinteren Fahrwerks 4" mit Stützrollen ausgefüllt sein.

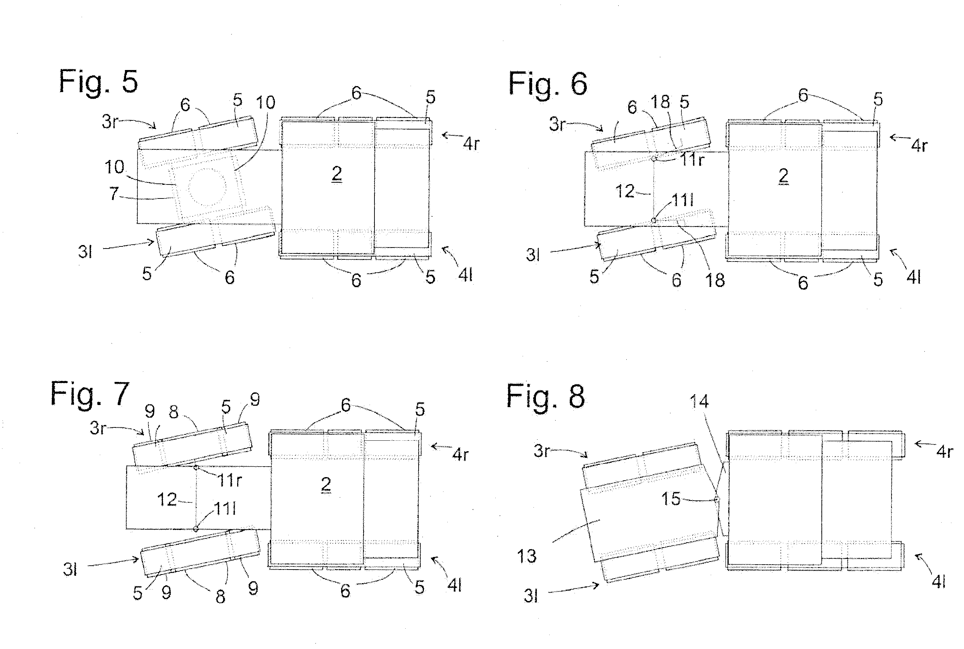

Fig. 5 zeigt eine Draufsicht auf die Zugmaschine gemäß Fig. 1 mit nach links eingeschlagenem vorderen Fahrwerk 3. Der unter dem Motorgehäuse 1 liegende Drehschemel 7 und hindurch verlaufende Achsen 10 sind gestrichelt dargestellt. Da das Motorgehäuse 1 vollständig oberhalb des Fahrwerks 3 liegt, können dessen Rollen 6 beim Einschlagen ungehindert unter das Motorgehäuse 1 einrücken. Eine Begrenzung des Einschlagwinkels kann sich ergeben, wenn auf einer Seite der Maschine sich Schiffe 31, 3r bzw. 41, 4r des vorderen und hinteren Raupenfahrwerks 3 bzw. 4 zu nahe kommen. Um dies zu vermeiden, kann es zweckmäßig sein, den Abstand zwischen den Schiffen 31, 3r des vorderen Fahrwerks 3 kleiner zu wählen als zwischen denen des hinteren.

Das Ausmaß der Vorwärts- und Rückwärtsbewegung der Schiffe 31, 3r des vorderen Fahrwerks 3 beim Einschlagen kann reduziert werden, wenn die Drehschemellenkung durch eine Achsschenkellenkung ersetzt wird, d.h. eine Aufhängung, bei der jedem Schiff des vorderen Fahrwerks 3 eine eigene Schwenkachse, in Fig. 6 mit 111, 11r bezeichnet, zugeordnet ist, die jeweils möglichst nah benachbart zu einem geometrischen Mittelpunkt der einzelnen Schiffe 31, 3r verläuft. In der in Fig. 6 gezeigten Ausgestaltung sind die Schiffe 3'l, 3'r des vorderen Fahrwerks 3' mit dem Motorgehäuse 1 über eine jeweils in Höhe der Schwenkachsen 111, 11r gelenkige Welle 12 verbunden. Da die Welle 12 zwischen den beiden Schwenkachsen 111, 11r in Bezug auf das Motorgehäuse 1 ortsfest ist, ist die Übertragung von Antriebskraft vom Motor auf sie einfacher als auf eine der mit dem Drehschemel 7 beweglichen Wellen 10 gemäß der Ausgestaltung von Fig. 5. Andererseits ist in den Raupenschiffen 31, 3r wiederum ein in Fig. 6 schematisch dargestelltes Getriebe 18 erforderlich, um Drehmoment von der Welle 12 auf die angetriebene Umlenkrolle 6 zu übertragen,

Fig. 7 zeigt eine Draufsicht auf die Maschine der Fig. 3 mit eingeschlagenem vorderem Fahrwerk 3". Die Welle 12 treibt hier über ein einfaches Ausgleichsgelenk am Ort der Schwenkachsen 111, 11r die zentralen Antriebsrollen 8; das Getriebe 18 entfällt. Zwar ist die Lenkbewegungsfreiheit der Rollen 8 durch die Karosserie 1 eingeschränkt, doch die Umlenkrollen 9 können unter die Karosserie einrücken, so dass die Bewegungsfreiheit der Rollen 8 die gleiche ist wie bei gleich großen Einzelrädern.

Bei der Ausgestaltung der Fig. 8 ist die Karosserie in Fahrtrichtung gegliedert in ein Vorderteil 13 und ein Hinterteil 14, die über eine vertikale Schwenkachse 15 miteinander verbunden sind. Durch Schwenken der beiden Teile 13, 14 und der jeweils starr mit ihnen verbundenen Fahrwerke 3, 4 gegeneinander wird die Maschine gelenkt. Die Figur zeigt jeweils gleich große Rollen 6 an den Fahrwerken 3, 4, doch können auch hier, genauso wie in den Figuren 2 bis 4 dargestellt, am kürzeren, vorderen Fahrwerk 3 kleinere Rollen als am hinteren, längeren Fahrwerk 4 oder an einem oder beiden Fahrwerke jeweils eine große Antriebsrolle 8 flankiert von kleineren Umlenkrollen 9 vorgesehen sein.

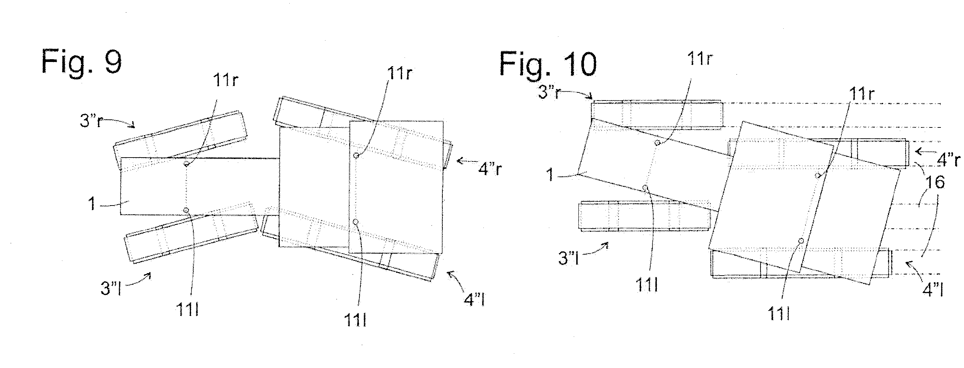

Fig. 9 zeigt eine Ausgestaltung, bei der beide Raupenfahrwerke 3, 4 lenkbar sind. Dargestellt ist eine Achsschenkellenkung mit zwei Stocks-Raupen, durch versteht sich, dass auch zwei Raupenfahrwerken mit angetriebener Umlenkrolle vom in Fig. 1 gezeigten Typ oder eine Kombination von Fahrwerkstypen verwendet werden können. Es können Achsschenkel- oder Drehschemellenkungen oder eine Kombination von beiden verwendet werden. Die Drehschemellenkung ist bevorzugt, da bei ihr aufgrund der Nähe der Schwenkachsen 111, 11r zu den Raupenschiffen diese bei einem Lenkeinschlag nur wenig nach vorn oder hinten ausgelenkt werden, so dass durch einen gleichzeitigen, gegensinnigen Lenkeinschlag an beiden Fahrwerken 3, 4 ein enger Kurvenradius realisierbar ist.

Es ist zweckmäßig, zusätzlich zum Betrieb mit gegensinnigem Lenkeinschlag einen Betriebsmodus vorzusehen, bei dem ein Lenkeinschlag jeweils gleichsinnig auf beide Fahrwerke 3, 4 übertragen wird, so dass diese parallel zueinander bleiben und die Zugmaschine sich geradeaus, aber schräg zu einer Längsachse der Karosserie mit gegeneinander versetzten Fahrspuren 16 der einzelnen Raupenschiffe bewegt, wie in Fig. 10 dargestellt. So verteilt sich die Last der Maschine ideal gleichmäßig über die befahrene Fläche.

### Bezugszeichen

- 1.: Motorgehäuse
- 2.: Fahrerkabine
- 3.: Raupenfahrwerk
- 4.: Raupenfahrwerk
- 5.: Raupenband
- 6.: Rolle
- 7.: Drehschemel
- 8.: Antriebsrolle
- 9.: Umlenkrolle
- 10.: Achse
- 11.: Schwenkachse
- 12.: Welle
- 13,: Vorderteil
- 14.: Hinterteil
- 15.: Schwenkachse
- 16.: Fahrspuren
- 17.: Stützrolle
- 18.: Getriebe

## Patentansprüche

1. Landwirtschaftliche Zugmaschine mit wenigstens einem vorderen und einem hinteren Raupenfahrwerk (3, 3', 3"; 4, 4"), von denen wenigstens eines (3, 3', 3"; 4) lenkbar ist, **dadurch gekennzeichnet, dass** die Länge der wenigstens zwei Raupenfahrwerke (3, 3', 3"; 4, 4") verschieden ist.

2. Landwirtschaftliche Zugmaschine nach Anspruch 1, **dadurch gekennzeichnet, dass** das vordere Raupenfahrwerk (3, 3', 3") kürzer als das hintere (4) ist.

3. Landwirtschaftliche Zugmaschine nach Anspruch 1 oder 2, **dadurch gekennzeichnet, dass** das wenigstens eine lenkbare Raupenfahrwerk (3, 3', 3") an einem Drehschemel (7) montiert ist.

4. Landwirtschaftliche Zugmaschine nach Anspruch 1 oder 2, **dadurch gekennzeichnet, dass** das wenigstens eine lenkbare Raupenfahrwerk (3) zwei Raupenschiffe (31, 3r) umfasst, die um voneinander beabstandete vertikale Achsen (11l, 11r) schwenkbar sind.

5. Landwirtschaftliche Zugmaschine nach einem der vorhergehenden Ansprüche, **dadurch gekennzeichnet, dass** vorderes und hinteres Raupenfahrwerk lenkbar sind.

6. Landwirtschaftliche Zugmaschine nach Anspruch 1 oder 2, **dadurch gekennzeichnet, dass** sie eine Karosserie mit zwei um eine vertikale Achse (15) gegeneinander schwenkbaren Karosserieteilen (13, 14) aufweist, von denen ein vorderes (13) von dem vorne ren Raupenfahrwerk (3) und ein hinteres (14) von dem hinteren Raupenfahrwerk (4) getragen ist.

7. Landwirtschaftliche Zugmaschine nach Anspruch 1 oder 2, **dadurch gekennzeichnet, dass** das längere Raupenfahrwerk (4) größere Umlenkrollen (6) aufweist als das kürzere (3, 3', 3").

8. Landwirtschaftliche Zugmaschine nach Anspruch 1 oder 2, **dadurch gekennzeichnet, dass** das längere Raupenfahrwerk (4) eine größere Zahl von Stützrollen aufweist als das kürzere (3, 3', 3").

9. Landwirtschaftliche Zugmaschine nach einem der vorhergehenden Ansprüche, **dadurch gekennzeichnet, dass** das wenigstens eine lenkbare Raupenfahrwerk (3") eine zentrale Antriebsrolle (8) und der Antriebsrolle (8) vor- und nachgelagerte Umlenkrollen (9) umfasst.

10. Landwirtschaftliche Zugmaschine nach Anspruch 9, **dadurch gekennzeichnet, dass** vorderes und hinteres Raupenfahrwerk (3", 4") jeweils eine zentrale Antriebsrolle (8) und der Antriebsrolle (8) vor- und nachgelagerte Umlenkrollen (9) umfassen und dass das vordere Raupenfahrwerk (3") kürzer als das hintere Raupenfahrwerk (4") ist.

11. Landwirtschaftliche Zugmaschine nach Anspruch 9 oder 10, soweit auf Anspruch 6 rückbezogen, **dadurch gekennzeichnet, dass** eine Antriebswelle (12) der zentralen Antriebsrollen (8) eines Raupenfahrwerk (3; 4) in Höhe der beiden Achsen (11l, 11r) gelenkig ist.

12. Landwirtschaftliche Zugmaschine nach einem der Ansprüche 9 bis 11, **dadurch gekennzeichnet, dass** die zentrale Antriebsrolle des wenigstens einen lenkbaren Raupenfahrwerks größer als dessen Umlenkrollen ist.

13. Landwirtschaftliche Zugmaschine nach Anspruch 9, **dadurch gekennzeichnet, dass** wenigstens ein anderes (4) der Raupenfahrwerke zwei Umlenkrollen (6) aufweist, die größer als alle anderen Rollen (17) dieses anderen Raupenfahrwerks (4) sind.

14. Landwirtschaftliche Zugmaschine nach Anspruch 9, **dadurch gekennzeichnet, dass** wenigstens ein anderes (4) der Raupenfahrwerke zwei Umlenkrollen (6) aufweist, von denen wenigstens eine angetrieben ist.
